# EUROPÄISCHE PATENTSCHRIFT

(11) **EP 1 969 205 B1**
(45) Veröffentlichungstag und Bekanntmachung des Hinweises auf die Patenterteilung: **27.05.2009**
(21) Anmeldenummer: 06841635.3
(22) Anmeldetag: 27.12.2006
(51) Int. Cl.: F01D 5/30

(54) **SCHLUSSBAUGRUPPE FÜR EINEN SCHAUFELKRANZ EINER STRÖMUNGSMASCHINE**
CLOSING ASSEMBLY FOR A BLADE RING OF TURBOMACHINERY
ENSEMBLE DE VERROUILLAGE POUR COURONNE D'AUBES D'UNE TURBOMACHINE

(30) Priorität: 02.01.2006 EP 06000026
(43) Veröffentlichungstag der Anmeldung: 17.09.2008
(73) Patentinhaber: SIEMENS AKTIENGESELLSCHAFT, 80333 München (DE)
(72) Erfinder: KRÜTZFELDT, Joachim, 45481 Mülheim an der Ruhr (DE); KUNZE, Markus, 46569 Hünxe (DE); MARTIN, Silvio-Ulrich, 46049 Oberhausen (DE); MUTKE, Stefan, 91207 Lauf (DE); QIAN, Kang, 45479 Mülheim an der Ruhr (DE); RICHTER, Christoph, 49477 Ibbenbüren (DE); SCHNEIDER, Oliver, 46487 Wesel (DE); SCHRÖDER, Peter, 45307 Essen (DE); SCHWARZ, Michael, 45478 Mülheim a. d. Ruhr (DE); WALTKE, Ulrich, 45468 Mülheim an der Ruhr (DE)
(86) Internationale Anmeldenummer: PCT/EP2006/070228
(87) Internationale Veröffentlichungsnummer: WO 2007/077185

(56) Entgegenhaltungen:
- EP-A- 1 302 677
- DE-A1- 2 615 701
- DE-A1- 2 934 298
- DE-C- 809 689
- GB-A- 1 270 540
- US-A- 2 421 855

## Beschreibung

Die Erfindung betrifft eine Schlussbaugruppe zum Schließen des verbleibenden Zwischenraums zwischen der ersten und der letzten in einer Umfangsnut einer Strömungsmaschine eingesetzten Schaufel eines Schaufelkranzes, mit mindestens zwei Teilen, die jeweils mit jeweils eine Hinterschneidung bildenden Vorsprüngen der Umfangsnut verhakbar sind, und mit einem Sicherungselement, welches die Teile gegen Herauslösen aus der Umfangsnut sichert.

Schlussbaugruppen derartiger Gattung gehen beispielsweise aus der EP 1 457 642 A2 und US 2002/0127105 A1 hervor. Beide Schlussbaugruppen bestehen im Wesentlichen aus zwei Seitenteilen, die in den verbleibenden Zwischenraum zwischen der ersten und der letzten Schaufel eines Schaufelkranzes eingesetzt werden. Da jedes Seitenteil sich jeweils mit einem die Hinterschneidung bildenden Vorsprung der Umfangsnut verhakt und damit beide Seitenteile in den Zwischenraum einbringbar sind, sind beide Seitenteile gemeinsam - in Axialrichtung.betrachtet - schmaler als der aufzufüllende und zu verschließende Zwischenraum. Nach der Montage der beiden Seitenteile verbleibt wiederum ein Raum zwischen diesen frei, der mit einem Zwischenteil aufgefüllt werden muss. Das Zwischenteil sichert die beiden Seitenteile gegen eine die jeweilige Verhakung lösende axiale Verschiebung und somit gegen ein Herauslösen aus der Umfangsnut. Um das Zwischenteil selbst gegen Herauslösen zu sichern, ist dieses mit jeweils zwei lippenartigen Stegen ausgestattet, welche jeweils durch plastisches Verformen in eine an jedem Seitenteil vorgesehene Tasche eingebogen werden. Dadurch ist das Zwischenteil mit jedem Seitenteil formschlüssig verhakt, wodurch ebenfalls die beiden Seitenteile in der Umfangsnut gehalten werden. Die US 2002/0127105A1 schlägt außerdem vor, dass das Zwischenteil über einen Schwalbenschwanz mit der ersten und der letzten Schaufel des Schaufelkranzes verhakt ist, wohingegen gemäß der EP 1 457 642 A1 jedes Seitenteil der Schlussbaugruppe mit der ersten und der letzten Schaufel des Schaufelkranzes verhakt ist. Dadurch wird eine Spaltbildung und -vergrößerung zwischen benachbarten Laufschaufeln und der Schlussbaugruppe in Umfangsrichtung im Wesentlichen verhindert.

Nachteilig bei den bekannten Schlussbaugruppen ist jedoch, dass zum Entfernen der Schlussbaugruppe diese zumindest teilweise im Bereich des Formschlusses aufwändig zerstört werden muss. Außerdem ist zu beachten, dass die Schlussbaugruppe den auftretenden thermischen und mechanischen Belastungen, insbesondere der beim Betrieb auftretenden Fliehkraft, sofern sie im Rotor einer Strömungsmaschine montiert ist, standhalten muss.

Des Weiteren ist aus der Patentschrift 809 689 des Deutschen Patentamtes eine Schlussbaugruppe mit zwei zueinander beweglichen Seitenteilen bekannt, zwischen denen ein trapezförmiges Spannelement zum Verspannen der beiden Teile in einer Umfangsnut eines Rotors vorgesehen ist. Nach dem Einsetzen der Teile der Schlussbaugruppe in die Umfangsnut kann das trapezförmige Spannelement mittels einer sich am Nutgrund der Umfangsnut abstützenden Schraube in Richtung Nutöffnung angehoben werden. Hierdurch bewegen sich die beiden Seitenteile voneinander weg, so dass deren Schultern die Vorsprünge der Umfangsnut hintergreifen.

Es wird dabei als nachteilig empfunden, dass die zum Anheben des Spannelementes nötige Schraube sich am Nutgrund der Umfangsnut abstützt. Aufgrund von unterschiedlichen thermischen Dehnungen des Rotors und den Bauteilen der Schlussbaugruppe und aufgrund der Fliehkrafteinwirkungen kann sich der Kontakt von Schraube und Nutgrund zufällig lösen, wodurch der sichere Sitz der Schlussbaugruppe aufgehoben wird.

Außerdem ist aus der Offenlegungsschrift DE 29 34 298 eine Schaufelfußverriegelung mit zwei Hälften bekannt. Die beiden Hälften sind jeweils mit den an den Seitenwänden der Umfangsnut angeordneten Vorsprünge verhakbar. Um die beiden Hälften in der Nut auf Abstand und somit verhakt zu befestigen, sind diese als geteilte Schraubenmutter ausgebildet, so dass eine Sicherungsschraube zwischen diesen eingeschraubt werden kann.

Ferner ist aus der US 2,421,855 ein Turbinenschaufelschloss bekannt, welches durch Anheben eines trapezförmig ausgebildeten Spannelementes die beiden Teile der Schlussbaugruppe mit den Hinterschneidungen der Umfangsnut verhakt.

Darüber hinaus sind aus der GB 1 270 540 und aus der DE 26 15 701 verformbare Befestiger bekannt, mit denen zwei Teile miteinander verbunden werden können.

Dementsprechend ist es die Aufgabe der Erfindung die Schaffung einer Schlussbaugruppe zum Schließen des verbleibenden Zwischenraums zwischen der ersten und der letzten in einer Umfangsnut einer Strömungsmaschine eingesetzten Schaufel eines Schaufelkranzes, welche einfach und kostengünstig lösbar ist und dennoch die hohen mechanischen Beanspruchungen zuverlässig und langlebig erträgt.

Zur Lösung dieser Aufgabe Schlägt die Erfindung eine Schlussbaugruppe mit den Merkmalen des Ansprüchs 1 var.

Die Erfindung geht von der Erkenntnis aus, dass die beiden Teile, welche auch als vorderes Teil und als hinteres Teil - bezogen auf die Axialrichtung eines die Umfangsnut aufweisenden Rotors - bezeichnet werden, nicht nacheinander sondern gleichzeitig in die Umfangsnut hineinbewegt werden können, sofern beide Teile mit ihren zur Umfangsnut zugewandten Bereichen zueinander bewegbar sind, so dass sie zwischen der engsten Stelle der Umfangsnut, in Axialrichtung betrachtet, durchpassen. Beide Teile sind im Wesentlichen C-förmig mit jeweils zwei Armen und einem die beiden Arme verbindenden Steg ausgebildet, wobei der äußere der beiden Arme jedes C-förmigen Teils in seiner Einbaulage die Umfangsnut flächig mit der zur Umfangsnut angrenzenden Außenfläche abschließt und der innere Arm jedes C-förmigen Teils mit einem die Hinterschneidung formenden Vorsprung der Umfangsnut verhakbar ist. Der zwischen dem inneren und dem äußeren Arm jedes Teils erstreckende Steg verläuft in Einbaulage in Radialrichtung. Jeder Steg weist eine zum gegenüberliegenden Teil zugewandte Seitenfläche auf, welche in Axialrichtung einen Schüsselraum begrenzen. Zwischen den beiden Teilen der Schlussbaugruppe ist ein Schlüssel angeordnet, dessen Schlüsselbart im Schlüsselraum in Axialrichtung sowohl Platz sparend als auch den axialen Schlüsselraum ausfüllend positioniert werden kann. Zum Einbau wird der Schlüssel so positioniert, dass die beiden Teile mit ihren in die Umfangsnut zuerst eingebrachten inneren Arme zueinander bewegbar, insbesondere verkippbar sind, so dass die Seitenflächen einen besonders schmalen axialen Schlüsselraum begrenzen. Der Schlüssel darf daher beim Einbau lediglich eine geringe axiale Breite benötigen, so dass die inneren Arme der zueinander verkippten Teile der Schlussbaugruppe in den zwischen den gegenüberliegenden Vorsprüngen der Umfangsnut vorhandenen Freiraum eingebracht werden können. Nachdem die äußeren Arme der Teile an äußeren Seitenwänden der Vorsprünge der Umfangsnut anliegen, wird durch das fortgesetzte Hineinbewegen der Schlussbaugruppe die inneren Arme der Teile nach jeweils vorne bzw. hinten geschwenkt, d.h. die Teile werden auseinander gespreizt, bis die inneren Arme mit den jeweiligen Vorsprüngen verhakt sind. In dieser Einbaulage begrenzen die Seitenflächen der gespreizten Teile einen Schlüsselraum, dessen axiale Breite, verglichen mit dem während des Einbauvorgangs, wesentlich breiter ist. Im Querschnitt betrachtet vergrößert sich der von den Seitenflächen begrenzte Schlüsselraum trapezförmig zum Nutgrund, nach innen hin. Um diesen Bauraum - entlang des Umfangs betrachtet - an zumindest einer Stelle in Axialrichtung aufzufüllen, wird der Schlüssel gedreht, so dass dessen Bart an mindestens einer Seitenfläche eines der beiden Teile anliegt. Der an der Seitenfläche anliegende Schlüsselbart des Schlüssels verhindert dann das Bewegen bzw. das Schwenken der beiden Teile zueinander, so dass die Schlussbaugruppe gegen Herauslösen aus der Umfangsnut gesichert ist. Zum Ausbau der Schlussbaugruppe werden die Arbeitsschritte in umgekehrter Reihenfolge durchgeführt. Die Erfindung zeichnet sich somit durch besonders wenige Bauteile aus. Sie ermöglicht aufgrund des relativ großen verbleibenden leeren Schlüsselraums im Innern der Umfangsnut auch eine besonders leichte Bauweise der Schlussbaugruppe, was bei einer Verwendung in einem Rotor aufgrund der geringeren Fliehkraftbelastung besonders vorteilhaft ist. Zudem ist die Fertigung der Teile besonders einfach und kostengünstig. Zusätzlich kann eine vergleichsweise schnelle Montage und/oder Demontage der Schlussbaugruppe erfolgen, da alle Elemente der Schlussbaugruppe gleichzeitig in die Umfangsnut eingesetzt werden. Außerdem ist ein zerstörendes Lösen der Schlussbaugruppe aufgrund des drehbaren Schlüssels unnötig.

Ein wesentliches Merkmal der Erfindung ist, dass das als Schlüssel ausgebildete Sicherungselement zwischen den beiden Teilen um seine Längsachse drehbar angeordnet ist und einen Schlüsselkopf und einen Schlüsselbart aufweist. Der Schlüsselbart ist zwischen zwei Positionen verstellbar. In einer ersten Position nimmt der Schlüsselbart einen besonders schmalen axialen Bauraum ein, so dass die beiden Teile nutseitig zueinander bewegbar sind. In einer zweiten Position füllt der Schlüsselbart - in Umfangsrichtung gesehen - an zumindest einer Stelle des Schlüsselraums diesen zwischen den beiden auseinander gespreizten Teilen aus, was das Schwenken der beiden Teile zueinander verhindert. Dadurch ist es möglich, dass jeder innere Arm der beiden Teile, der zum Verhaken mit einem die Hinterschneidung bildenden Vorsprung nötig ist, geneigt in die Umfangsnut einbringbar ist, und erst, wenn dieser im Bereich der Hinterschneidung angeordnet ist, durch Einschwenken den jeweiligen Vorsprung der Umfangsnut hintergreift. Bisher wurde beim Stand der Technik jedes Teil durch zwei nacheinander ablaufende Montageschritte montiert, indem zuerst das vordere (oder hintere) Teil radial in die Umfangsnut eingebracht und in axialer Richtung zum vorderen Ende (oder zum hinteren Ende) der Umfangsnut verschoben wurde und anschließend das zweite Teil. Mit der Erfindung wird nun eine Schlussbaugruppe angegeben, bei der mit der Montage der Schlussbaugruppe die Verhakung jedes Seitenteils mit dem die Hinterschneidungen bildende Vorsprünge durch Einschwenken bzw. eine abschließende Drehbewegung ermöglicht. Dadurch ist eine besonders einfach zu montierende Schlussbaugruppe angegeben, die zudem besonders einfach zerstörungslos wieder gelöst und demontiert werden kann.

Im Gegensatz zu bekannten Lösungen stützt sich das die beiden Teile spreizende Sicherungselement nicht am Nutgrund der Umfangsnut ab, sondern ist ausschließlich mit den beiden Teilen verspannt. Hierdurch entsteht eine in sich geschlossen gesicherte Schlussbaugruppe, welche unabhängig von den thermischen Dehnungen des Rotors gegen zufälliges Zerlegen zuverlässig gesichert ist.

Im Rahmen von Weiterbildungen der Erfindung werden vorteilhafte Ausgestaltungen in den Unteransprüchen angegeben.

In einer ersten vorteilhaften Weiterbildung ist das Sicherungselement durch Drehen um 90° von der ersten Position in die zweite Position verlagerbar.

Besonders vorteilhaft werden die Teile gegen Schwenken und gegen Herauslösen aus der Umfangsnut gesichert, wenn der Schlüsselbart als Doppelbart mit zwei Barthälften ausgebildet ist, und jede Barthälfte jeweils an die eine Seitenfläche - jedes Teils anlegbar ist. Da jede Barthälfte an die eine Seitenfläche jedes Teils anlegbar ist, wird der zwischen den beiden Seitenflächen eingeschlossene Schlüsselraum der auseinander gekippten Teile an dieser Stelle im Querschnitt in axialer Richtung gesehen, lückenlos aufgefüllt, so dass auch ein Abknicken des Schlüssels aus der Radialrichtung heraus sicher vermieden ist. Somit kann eine besonders zuverlässige Sicherung der Teile gegen Schwenken und gegen Herauslösen aus der Umfangsnut angegeben werden.

Wenn die Seitenfläche des Teils einen Schlitz zur Aufnahme des Schlüsselbarts aufweist, in welchem der Schlüsselbart teilweise eingreifen kann, wird der Schlüssel durch den Schlitz drehgesichert, so dass auch beim Betrieb der Strömungsmaschine auftretende Vibrationen oder andere Einflüsse ein ungeplantes Verdrehen des Schlüssels nicht herbeiführen können. Demnach verhindert der in den Schlitz eingreifende Schlüsselbart auch das Schwenken der Teile zueinander und dementsprechend auch das Herauslösen der Teile aus der Umfangsnut besonders zuverlässig.

In einer Weiterbildung des Schlüssels weist dieser am Schlüsselkopf eine Aufnahme für ein Verdrehwerkzeug auf, mittels dem der Schlüssel besonders einfach von seiner Montagelage in die Sicherungslage bzw. Betriebslage und zurück verdreht werden kann. Beispielsweise weist der Schlüsselkopf eine Aufnahme auf, die als Sechskant, als Vierkant oder als Stern für einen korrespondierenden Schraubendreher ausgebildet sein kann.

Besonders vorteilhaft stellt sich die Ausgestaltung dar, bei der jedes Teil an eine Seitenwand anlegbar ist, die von einem die Hinterschneidung bildenden Vorsprung der Umfangsnut gebildet ist. Dadurch wird verhindert, dass die gesamte Schlussbaugruppe als Einheit sich innerhalb der Umfangsnut verdrehen kann, wenn der Zwischenraum zwischen der ersten und der letzten Schaufel des Schaufelkranzes sich aus unvorhersehbaren Gründen in Umfangsrichtung vergrößert. Selbst für diesen Fall wird mit der vorgeschlagenen Weiterbildung eine besonders zuverlässige und gegen Herauslösen aus der Umfangsnut gesicherte Schlussbaugruppe angegeben.

Um den Schlüsselbart besonders zuverlässig an die Seitenfläche jedes Teils unter einer Vorspannung anzulegen, weist der Schlüsselkopf ein Außengewinde zum Aufschrauben einer Gewindemutter auf, welche Gewindemutter sich an beiden Teilen abstützt und das Sicherungselement mit den beiden Teilen verspannt. Da der Schlüsselraum der auseinander geklappten Teile nach Art eines Trapezes sich zum Nutgrund hin erweitert, ist der Schlüsselbart, im Querschnitt gesehen, korrespondierend konisch ausgebildet. Dieser keilartige Schlüsselbart wird aufgrund der Gewindemutter, welche sich an den beiden Teilen außen abstützt, in den sich nach außen verjüngenden Schlüsselraum gezogen, was die beiden Teile besonders fest mit den Vorsprüngen und auch mit dem Schlüssel verspannt. Es kann somit eine Schlussbaugruppe angegeben werden, bei der ein ungewollt selbsttätiges Verdrehen des Schlüssels besonders zuverlässig verhindert wird.

Um aerodynamische Verluste im Bereich der Schlussbaugruppe zu vermeiden, sind der Schlüsselkopf und/oder die Gewindemutter in beide Teile versenkbar. Wenn darüber hinaus das Sicherungselement oder die Gewindemutter gegen Lösen, beispielsweise durch eine vergleichsweise kleine Anstemmung gesichert ist, ist das ungeplante Herauslösen der Teile der Schlussbaugruppe aus der Umfangsnut unmöglich.

Die Schlussbaugruppe kann insbesondere in einer Strömungsmaschine, beispielsweise in einer Turbine, in einer Gasturbine, in einem Verdichter oder innerhalb einer Dampfturbine eingesetzt werden, die jeweils einen Rotor mit mindestens einer Hinterschneidung aufweisenden Umfangsnut und mit darin eingesetzten Laufschaufeln aufweist, wobei der verbleibende Zwischenraum zwischen der ersten und der letzten in der Umfangsnut eingesetzten Laufschaufel mit der erfindungsgemäßen Schlussbaugruppe verschlossen ist. Die Strömungsmaschine als auch der Rotor weisen eine besonders lange Lebensdauer auf und für den Fall, dass die Laufschaufeln des Kranzes ausgetauscht werden müssen, kann die Schlussbaugruppe besonders einfach, schnell und kostengünstig demontiert und wieder verwendet werden.

Die weitere Erläuterung der Erfindung erfolgt anhand der in der Zeichnung dargestellten Ausführungsbeispiele.

Im Einzelnen zeigen:
- FIG 1: die Draufsicht auf eine mit Laufschaufeln bestückte Umfangsnut, bei der der verbleibende Zwischenraum zwischen der ersten und der letzten Laufschaufel mit einer zwei Teile und ein Sicherungselement umfassenden Schlussbaugruppe verschlossen ist,
- FIG 2: in Querschnittsansicht die Umfangsnut mit der in verkippter Position angeordneten Schlussbaugruppe während des Einbaus in die Umfangsnut,
- FIG 3, 4: in Querschnittsansicht die erfindungsgemäße Schlussbaugruppe an unterschiedlichen Positionen innerhalb der Umfangsnut während des Einbaus und
- FIG 5: eine weitere Ausgestaltung der Schlussbaugruppe in einer Querschnittsansicht gemäß Schnittlinie VI
- FIG 6: die Schnittansicht V auf die Umfangsnut mit verschlossenem Zwischenraum in der weiteren Ausführungsvariante der Erfindung.

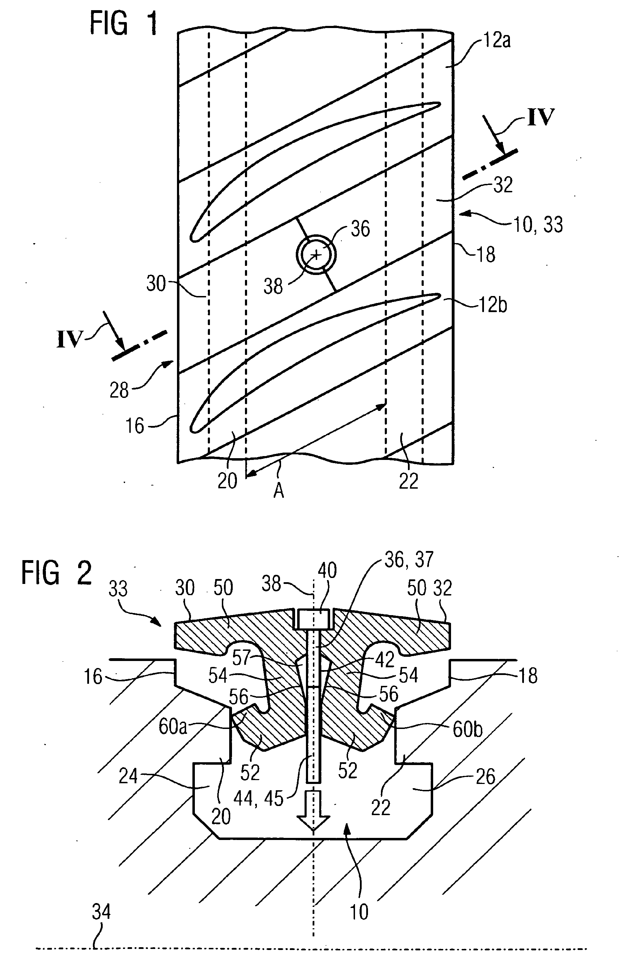

FIG 1 zeigt einen Ausschnitt einer Umfangsnut 10, in welcher Schaufeln 12 einer Strömungsmaschine eingesetzt sind. Die Umfangsnut 10 ist an der Außenfläche eines Rotors der Strömungsmaschine vorgesehen. Die Umfangsnut 10 könnte auch an einem Innengehäuse eines Verdichters einer Flugzeugturbine vorgesehen sein, an der Leitschaufel befestigt werden. Die Umfangsnut 10 weist in Axialrichtung des Rotors gesehen eine vordere Seitenwand 16 und eine hintere Seitenwand 18 auf, an denen jeweils in Umfangsrichtung verlaufende und sich in axialer Richtung erstreckende Vorsprünge 20 und 22 angeordnet sind, die jeweils eine vordere und eine hintere Hinterschneidung 24, 26 bilden (FIG 2).

In die Umfangsnut 10 werden Laufschaufeln 12a, 12b eingesetzt, welche zu den Hinterschneidungen 24, 26 korrespondierend ausgeführte, hammerförmige Schaufelfüße aufweisen. Dabei werden die Laufschaufeln 12a, 12b in die Umfangsnut 10 eingesetzt und anschließend so weit, beispielsweise um 45° oder 60° gedreht, bis die hammerförmigen Schaufelfüße die Vorsprünge 20, 22 hintergreifen.

Der zwischen der ersten Laufschaufel 12a und der letzten Laufschaufel 12b verbleibende Zwischenraum 28 der ansonsten vollständig mit Schaufeln 12 eines Schaufelkranzes und ggf. dazwischen angeordneten Zwischenelementen bestückten Umfangsnut 10 muss mittels einer besonderen Vorrichtung, die Schlussbaugruppe 33, Schaufelschloss oder auch Rotor-Schluss genannt wird, verschlossen werden.

Die Schlussbaugruppe 33 umfasst zwei Teile als vorderes Teil 30 und hinteres Teil 32, bezogen auf die Rotationsachse 34 eines Rotors der Strömungsmaschine, welche den Zwischenraum 28 verschließt. FIG 2 zeigt die Schlussbaugruppe 33 mit zwei zueinander bewegten Teilen 30, 32 während des Einbaus in den freien Zwischenraum 28 der Umfangsnut 10. Die Schlussbaugruppe 33 umfasst die beiden Teile 30, 32 und ferner ein Sicherungselement 36, welches schlüsselartig ausgebildet ist und zwischen den beiden Teilen 30, 32 um seine Längsachse 38 drehbar angeordnet ist. Das Sicherungselement 36 ist als Schlüssel 37 ausgebildet und weist aufeinander folgend einen Schlüsselkopf 40, einen Schlüsselschaft 42 und einen Schlüsselbart 44 auf. Der Schlüsselbart 44 ist plattenförmig ausgebildet, wobei die gegenüberliegenden Schmalflächen 45 des Schlüsselbarts 44 nach außen gesehen konisch zueinander verlaufen, so dass der Schlüsselbart 44, welcher als Doppelbart zwei Barthälften umfasst, insgesamt eine trapezartige Kontur aufweist.

Jedes der beiden Teile 30, 32 ist, wie FIG 2 zeigt, im Querschnitt im Wesentlichen C-förmig ausgebildet und weist jeweils einen äußeren Arm 50, einen inneren Arm 52 und einen die Arme 50, 52 verbindenden Steg 54 auf. In der gezeigten Ausgestaltung sind die inneren Arme 52 in Axialrichtung gesehen kürzer als die äußeren Arme 50. Jedes Teil 30, 32 weist eine am Steg 54 angeordnete und jeweils dem benachbarten Teil 32, 30 zugewandte Seitenfläche 56 auf. Zwischen den beiden Seitenflächen 56 ist der Schlüsselbart 44 des Schlüssels 37 angeordnet.

Während des Einbaus der Schlussbaugruppe 33 erstreckt sich der, Schlüsselbart 44 in Umfangsrichtung der Umfangsnut 10, so dass die Schmalflächen 45 des Schlüsselbartes 44 frei liegen. Ein zwischen den beiden Seitenflächen 56 eingeschlossener Schlüsselraum 57 kann somit - in Axialrichtung betrachtet - aufgrund der nutseitig, d.h. im Bereich der inneren Arme 52 zueinander bewegten Teile 30, 32 besonders schmal sein (FIG 2). Der axiale Abstand zwischen einem vorderen, am inneren Arm 52 angeordneten Vorsprung 60a und einem hinteren, am inneren Arm 52 angeordneten Vorsprung 60b ist folglich kleiner als der axiale Abstand A zwischen den beiden Vorsprüngen 20, 22 der Umfangsnut 10, so dass der der Umfangsnut 10 zugewandte Bereich der Schlussbaugruppe 33 zwischen den beiden Vorsprüngen 20, 22 der Umfangsnut 10 hindurch passt. Die Schlussbaugruppe 33 kann in die Umfangsnut 10 eingesetzt werden.

Folglich werden zum Einbau der Schlussbaugruppe 33 die beiden Teile 30, 32 nutseitig zueinander geschwenkt, so dass das Einsetzen der Schlussbaugruppe 33 in die Umfangsnut 10 problemlos möglicht ist.

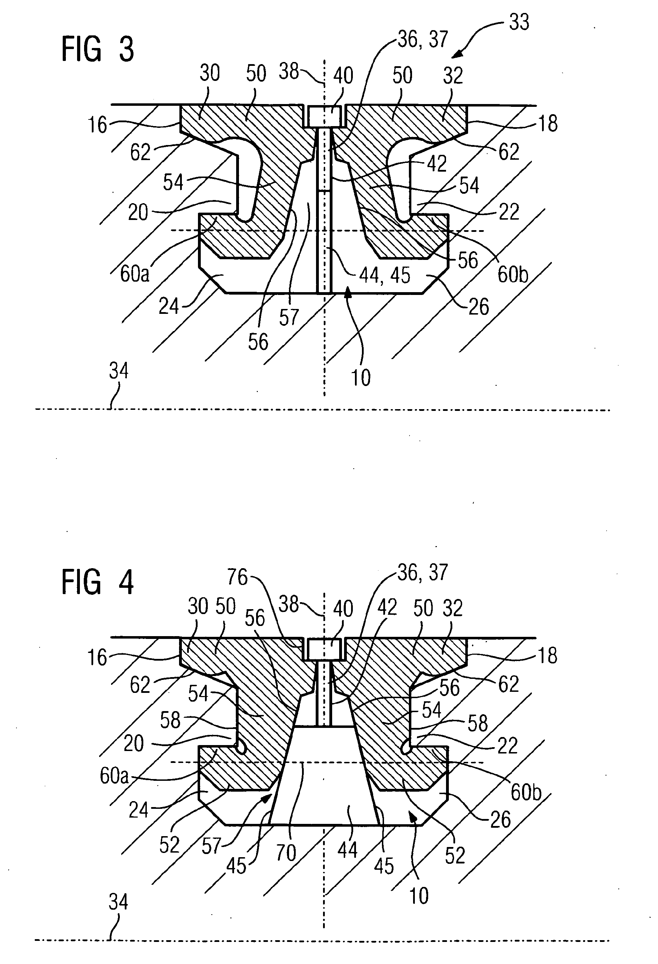

Während der Einsetzbewegung der Schlussbaugruppe 33 kommt es zum Anliegen der äußeren Arme 50 an den Außenflächen 62 der Vorsprünge 20 und 22, so dass durch die Fortsetzung der Einsetzbewegung beide Teile 30, 32 nutgrundseitig nach vorne und nach hinten gedreht, d.h. geschwenkt werden, wodurch die an den inneren Armen 52 angeordneten Vorsprünge 60 die an den Seitenwänden 16 und 18 der Umfangsnut 10 angeordneten Vorsprünge 20 und 22 hintergreifen. Diese in einem Zwischenschritt der Montage erreichte Position der Schlussbaugruppe 33 ist in FIG 3 dargestellt und kennzeichnet die Einbaulage der Teile 30, 32. Der von den Seitenflächen 56 begrenzte Schlüsselraum 57 ist nun vergleichsweise breit. Nach Erreichen der Einbaulage wird das Sicherungselement 36 der Schlussbaugruppe 33 um beispielsweise einen Winkel von 90° gedreht, so dass die Schmalflächen 45 des Schlüsselbarts 44 an den Seitenflächen 56 der Teile 30, 32 anliegen. Dies zeigt FIG 4. Die linke Barthälfte liegt an der Seitenfläche 56 des vorderen Teils 30 an und die rechte Barthälfte an der Seitenwand 56 des hinteren Teils 32. Dadurch ist der axiale Schlüsselraum 57 entlang der gestrichelten Linie 70 lückenlos aufgefüllt, so dass die Teile 30, 32 nicht mehr zueinander bewegt werden können. Dementsprechend ist die Schlussbaugruppe 33 gegen Herauslösen aus der Umfangsnut 10 gesichert. Aufgrund der flächigen Anlage des Schlüsselbarts 44, bei der jede Schmalfläche 57 an einer der Seitenfläche 56 anliegt, ist selbst bei einer Wechselbeanspruchung eine sichere Anlage des Schlüssels 37 gewährleistet.

Außerdem zeigt FIG 4, dass jedes Teil 30, 32 an einer Seitenwand 58 des Vorsprungs 20, 22 flächig anliegt. Sollte sich im unwahrscheinlichen Falle ein in Umfangsrichtung gerichtetes Spiel zwischen der Schlussbaugruppe 33 und einer der benachbarten Laufschaufeln 12a, 12b oder beiden ergeben, so ist die Schlussbaugruppe 33 als Ganzes gegen ein Verdrehen in der Umfangsnut 10 gesichert, da beide Teile 30, 32 an den Seitenwänden 58 ohne ein dafür ausreichendes Spiel fest anliegen.

Das Sicherungselement 36 weist eine am Schlüsselkopf 40 stirnseitig angeordnete Aufnahme für ein Verdrehwerkzeug, beispielsweise einen Innenvierkant auf, um es zwischen den gezeigten Positionen drehen zu können.

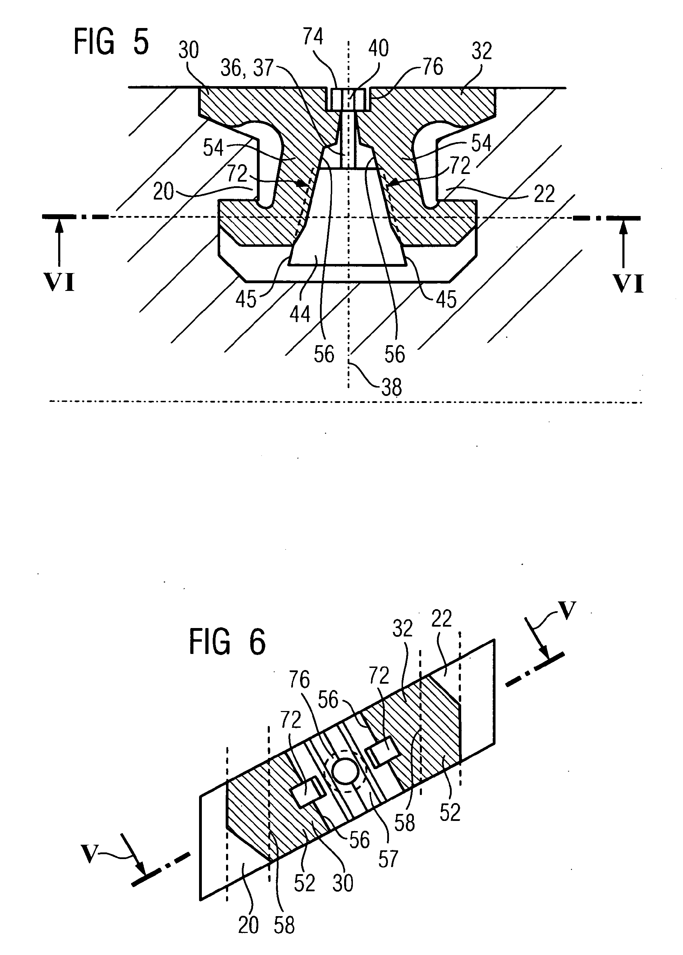

FIG 5 zeigt im Querschnitt gemäß der Schnittlinie V der FIG 6 eine Variante der erfindungsgemäßen Schlussbaugruppe 33 in montierter Lage. An den Seitenflächen 56 der Teile 30, 32 sind Schlitze 72 vorgesehen, welche gemäß des Schnittes VI in FIG 6 unter Ausblendung des Sicherungselementes dargestellt sind. In FIG 5 und FIG 6 sind die bereits aus den FIG 2 bis FIG 4 bekannten Elemente mit identischen Bezugszeichen beziffert. Sie weisen jeweils die identische Funktion auf, so dass hier auf die Beschreibung der schon bekannten Elemente und Wirkung verzichtet wird.

Neben der Aufnahme für das Verdrehwerkzeug weist das Sicherungselement 36 gemäß FIG 5 an seinem Schlüsselkopf 40 ein Außengewinde zum Aufschrauben einer ggf. auch selbstsichernden Gewindemutter 74 auf, mit welcher der Schlüsselbart 44 des Sicherungselements 36 in die beiden Schlitze 72 nach entsprechender Drehung der Gewindemutter 74 teilweise versenkt bzw. eingehoben werden kann. Dabei stützt sich die Gewindemutter 74 außen an den beiden Teilen 30, 32 ab und ist in einer äußeren Ausnehmung 76 aerodynamisch versenkt.

Damit das Sicherungselement 36 auch gegen ein ungewolltes Drehen gesichert ist, kann es darüber hinaus auch noch mit einem der beiden Teile 30, 32 geringfügig verstemmt werden.

Eine wie aus dem Stand der Technik bekannte aufwändige Verstemmung zweier lippenartiger Stege ist nicht erforderlich.

Selbstverständlich ist auch eine Kombination der aus FIG 4 und FIG 5 bekannten Schlussbaugruppe denkbar, bei der die Teile 30, 32 gemäß FIG 4 mit einem Schlüssel und einer schlüsselkopfseitig angeschraubten Gewindemutter Schlussbaugruppe mit den beiden Teilen verspannbar ist.

Insgesamt wird mit der erfindungsgemäßen Schlussbaugruppe eine Vorrichtung zum Schließen des verbleibenden Zwischenraums zwischen der ersten und der letzten in einer Umfangsnut einer Strömungsmaschine eingesetzten Schaufel eines Schaufelkranzes angegeben, die lediglich aus zwei den Zwischenraum abdeckenden Teilen besteht. Damit die Teile in die Umfangsnut einführbar sind, sind die inneren Arme der beiden Teile zueinander schwenkbar, so dass diese zwischen den Vorsprüngen der Umfangsnut einschiebbar sind. Damit die beiden Teile in ihrer endgültigen Lage gegen Verkippen und gegen Herauslösen aus der Umfangsnut gesichert werden, ist zwischen diesen ein um seine Längsachse drehbar angeordnetes Sicherungselement vorgesehen, welches einen Schlüsselkopf und einen Schlüsselbart aufweist, wobei der Schlüsselbart an mindestens eine Seitenwand des einen Teils anlegbar ist.

## Patentansprüche

1. Schlussbaugruppe (33) zum Schließen des verbleibenden Zwischenraums (28) zwischen der ersten und der letzen in einer Umfangsnut (10) einer Strömungsmaschine eingesetzten Schaufel (12a, 12b) eines Schaufelkranzes,
mit zwei Teilen (30, 32), die jeweils mit eine Hinterschneidung (24, 26) bildenden Vorsprüngen (20, 22) der Umfangsnut (10) verhakbar sind, und
mit einem Sicherungselement (36), welches die Teile (30, 32) gegen Herauslösen aus der Umfangsnut (10) sichert und zwischen den beiden Teilen (30, 32) um seine Längsachse (38) drehbar angeordnet ist,
**dadurch gekennzeichnet, dass**
das Sicherungselement (36) als Schlüssel (37) mit einen Schlüsselkopf (40) und einen plattenförmigen Schlüsselbart (44) ausgebildet ist, welcher Schlüsselbart (44) durch Drehen derartig zwischen zwei Positionen positionierbar ist,
dass in einer ersten Positionen zur Montage die beiden Teile (30, 32) durch zueinander Schwenken zwischen den gegenüberliegenden Vorsprüngen (20, 22) der Umfangsnut (10) hindurch in die Umfangsnut (10) gleichzeitig einsetzbar und anschließend auseinander spreizbar sind, und
dass in einer zweiten Positionen zur Sicherung der Teile (30, 32) gegen zueinander Schwenken in ihrer Einbaulage der Schlüsselbart (44) an mindestens eine Seitenfläche (56) eines der gespreizten Teile (30, 32) anlegbar ist.

2. Schlussbaugruppe (33) nach Anspruch 1,
bei der das Sicherungselement (36) durch Drehen um 90° von der ersten Position in die zweite Position verlagerbar ist.

3. Schlussbaugruppe (33) nach Anspruch 1 oder 2,
bei der der Schlüsselbart (44) als Doppelbart mit zwei Barthälften ausgebildet ist, und jede Barthälfte jeweils an die eine Seitenfläche (56) jedes Teils (30, 32) anlegbar ist.

4. Schlussbaugruppe (33) nach Anspruch 1, 2 oder 3,
bei der die Seitenfläche (56) der Teile (30, 32) einen Schlitz (72)aufweist, in welcher der Schlüsselbart (44) teilweise eingreifen kann.

5. Schlussbaugruppe (33) nach einem der vorhergehenden Ansprüche,
bei der der Schlüsselkopf (40) eine Aufnahme für ein Verdrehwerkzeug aufweist.

6. Schlussbaugruppe (33) nach einem der vorhergehenden Ansprüche,
bei der jedes Teil (30, 32) an eine Seitenwand (58) anlegbar ist, die von einem die Hinterschneidung (24, 26) bildenden Vorsprung (20, 22) der Umfangsnut (10) gebildet ist.

7. Schlussbaugruppe (33) nach einem der vorangehenden Ansprüche,
bei der der Schlüsselkopf (40) ein Außengewinde zum Aufschrauben einer Gewindemutter (74) aufweist, welche Gewindemutter (74) das Sicherungselement (36) an den beiden Teilen (30, 32) befestigt.

8. Schlussbaugruppe (33) nach Anspruch 7,
bei der der Schlüsselkopf (40) und/oder die Gewindemutter (74) in die Teile (30, 32) versenkbar ist.

9. Schlussbaugruppe (33) nach einem der vorangehenden Ansprüche,
bei der das Sicherungselement (36) oder die Gewindemutter (74) gegen Lösen gesichert ist.

10. Strömungsmaschine mit einem Rotor, der mindestens eine Hinterschneidungen (24, 26) aufweisende Umfangsnut (10) mit darin eingesetzten Laufschaufeln (12) aufweist,
wobei der verbleibende Zwischenraum (28) zwischen der ersten und der letzten in der Umfangsnut (10) eingesetzten Laufschaufel (12a, 12b) mit einer Schlussbaugruppe (33) nach einem der vorangehenden Ansprüche verschlossen ist.

11. Strömungsmaschine nach Anspruch 10,
ausgebildet als Turbine einer Gasturbine, als Verdichter oder als Dampfturbine.

## Claims

1. A closing assembly (33) for closing the remaining intermediate space (28) between the first and the last blades (12a, 12b), which are inserted in a circumferential groove (10) of turbomachinery, of a blade ring, having two parts (30, 32) which can each be hooked by means of projections (20, 22), which form an undercut (24, 26), on the circumferential groove (10), and having a securing element (36) which secures the parts (30, 32) against falling out of the circumferential groove (10) and is arranged between the two parts (30, 32) such that it can rotate about its longitudinal axis (38),
**characterized in that**
the securing element (36) is in the form of a key (37), with a key head (40) and a key bit (44) which is in the form of a plate and can be positioned between two positions by rotation such that,
in a first position for fitting, the two parts (30, 32) can be inserted at the same time into the circumferential groove (10) by pivoting with respect to one another between the opposite projections (20, 22) on the circumferential groove (10) and can then be spread apart from one another,
and
**in that**, in a second position in order to secure the parts (30, 32) against pivoting with respect to one another in their installed position, the key bit (44) can be placed on at least one side surface (56) of one of the spread parts (30, 32).

2. Closing assembly (33) according to Claim 1,
in which the securing element (36) can be moved from the first position to the second position by rotation through 90°.

3. Closing assembly (33) according to Claim 1 or 2,
in which the key bit (44) is in the form of a double bit with two bit halves, and each bit half can in each case be placed on one side surface (56) of each part (30, 32).

4. Closing assembly (33) according to Claim 1, 2 or 3,
in which the side surface (56) of the parts (30, 32) has a slot (72) in which the key bit (44) can partially engage.

5. Closing assembly (33) according to one of the preceding claims,
in which the key head (40) has a receptacle for a rotating tool.

6. Closing assembly (33) according to one of the preceding claims,
in which each part (30, 32) can be placed on a side wall (58) which is formed by a projection (20, 22), which forms the undercut (24, 26), on the circumferential groove (10).

7. Closing assembly (33) according to one of the preceding claims,
in which the key head (40) has an external thread for a threaded nut (74) to be screwed onto, which threaded nut (74) attaches the securing element (36) to the two parts (30, 32).

8. Closing assembly (33) according to claim 7,
in which the key head (40) and/or the threaded nut (74) can be recessed in the parts (30, 32).

9. Closing assembly (33) according to one of the preceding claims,
in which the securing element (36) or the threaded nut (74) is secured against becoming loose.

10. Turbomachinery having a rotor which has at least one circumferential groove (10), which has undercuts (24, 26), with rotor blades (12) inserted therein, with the remaining intermediate space (28) between the first and the last rotor blades (12a, 12b) inserted in the circumferential groove (10) being closed by a closing assembly (33) according to one of the preceding claims.

11. Turbomachinery according to Claim 10,
in the form of a turbine of a gas turbine, in the form of a compressor or in the form of a steam turbine.

## Revendications

1. Ensemble (33) de fermeture pour fermer l'espace (28) intermédiaire restant entre les première et dernière aubes (12a,12b) d'une couronne d'aubes, les aubes étant insérées dans une rainure (10) périphérique d'une turbomachine, l'ensemble comportant deux parties (30,32), qui peuvent être accrochées à une saillie respectivement (20,22) de la rainure (10) périphérique, formant une contre-dépouille (24,26), et comportant un élément (36) de sécurité, qui assure les parties (30,32) à l'encontre d'un déverrouillage hors de la rainure (10) périphérique et qui est disposé de manière à pouvoir tourner par rapport à son axe (38) longitudinal entre les deux parties (30,32),
**caractérisé en ce que**
l'élément (36) est réalisé sous la forme d'une clé (37) comportant une tête (40) de clé et un panneton (44) en forme de plaque, le panneton (44) pouvant être positionné entre deux positions, de manière
à ce que, dans une première position, pour le montage les deux parties (30,32) peuvent être insérées dans la rainure (10) périphérique simultanément par pivotement l'une par rapport à l'autre entre les saillies (20,22) opposées de la rainure (10) périphérique et peuvent être ensuite écartées l'une de l'autre et
à ce que, dans une deuxième position, pour bloquer les parties (30,32) en leur position montée en les empêchant de pivoter l'une par rapport à l'autre, le panneton peut être appliqué à au moins une face latérale (56) d'une des parties (30,32) écartées.

2. Ensemble de fermeture (33) suivant la revendication 1, dans lequel l'élément (36) de sécurité peut être déplacé de la première position à la deuxième position par rotation de 90°.

3. Ensemble (33) de fermeture suivant la revendication 1 ou 2, dans lequel le panneton (44) est réalisé sous la forme d'un panneton double comportant deux demi-pannetons, et chaque demi-panneton peut être appliqué respectivement à ladite une face (56) latérale de chaque partie (30,32).

4. Ensemble (33) de fermeture suivant la revendication 1, 2 ou 3, dans lequel les faces (56) latérales des parties (30,32) comportent une fente (72), dans laquelle le panneton (44) peut pénétrer partiellement.

5. Ensemble (33) de fermeture suivant l'une des revendications précédentes, dans lequel la tête (40) de clé comporte un logement pour un outil de torsion.

6. Ensemble (33) de fermeture suivant l'une des revendications précédentes, dans lequel chaque partie (30,32) peut être appliquée à une paroi (58) latérale, qui est formée à partir d'une saillie (20,22) de la rainure (10) périphérique formant la contre-dépouille (24,26).

7. Ensemble (33) de fermeture suivant l'une des revendications précédentes, dans lequel la tête (40) de clé comporte un filetage pour le vissage d'un écrou (74) taraudé, l'écrou (74) taraudé fixant l'élément (36) de sécurité aux deux parties (30,32).

8. Ensemble (33) de fermeture suivant la revendication 7, dans lequel la tête (40) de clé et/ou l'écrou (74) taraudé peut (peuvent) être enfoncé (s) dans les parties (30,32).

9. Ensemble (33) de fermeture suivant l'une des revendications précédentes, dans lequel l'élément (36) de sécurité ou l'écrou (74) taraudé sont empêchés de se desserrer.

10. Turbomachine comportant un rotor qui comporte au moins une rainure (10) périphérique comportant des contre-dépouilles (24,26), des aubes (12) étant insérées dans la rainure périphérique, l'espace (28) intermédiaire restant entre la première et la dernière des aubes (12a,12b) insérées dans la rainure (10) périphérique étant fermé par un ensemble (33) de fermeture suivant l'une des revendications précédentes.

11. Turbomachine suivant la revendication 10, réalisée sous la forme d'une turbine à gaz sous la forme d'un compresseur ou sous la forme d'une turbine à vapeur.
